# EUROPEAN PATENT APPLICATION

(11) **EP 4 159 523 A1**
(43) Date of publication of application: **05.04.2023**
(21) Application number: 21465546.6
(22) Date of filing: 30.09.2021
(51) Int. Cl.: B60L 15/00, B60L 53/22, B60L 53/24, B60L 58/20

(54) **DRIVING APPARATUS, CONTROL UNIT TO OPERATE THE DRIVING APPARATUS AND DRIVING APPARATUS SYSTEM**

(71) Applicant: Vitesco Technologies GmbH, 30165 Hannover (DE)
(72) Inventor: Kotlar, Aurelian, 81737 München (DE)
(74) Representative: Vitesco Technologies

(57) **Abstract**

A driving apparatus for an internal combustion engine of a hybrid vehicle comprises an electrical machine (M), a first port (P1), a second port (P2), and an inverter (INV). The first port (P1) operates for connecting a first energy storage device (ES1), wherein the first energy storage device (ES1) is configured to drive the electrical machine (M) and configured to be chargeable by the electrical machine (M). The second port (P2) operates for connecting a second energy storage device (ES2). The second energy storage device (ES2) is configured to be chargeable by the first energy storage device (ES1). The inverter (INV) is configured to provide in a third operation mode energy from the first energy storage device (ES1) to the second energy storage device (ES2). In the third operation mode at least one power switching element of the inverter (INV) forms at least one switch of a buck converter and at least one coil of the electric machine (M) is operated as inductance of the buck converter.

## Description

### TECHNICAL FIELD

The present invention relates to a driving apparatus, in particular to a driving apparatus for a hybrid electric vehicle. Furthermore, the present invention relates to a control unit to operate the driving apparatus and to a driving apparatus system.

### BACKGROUND

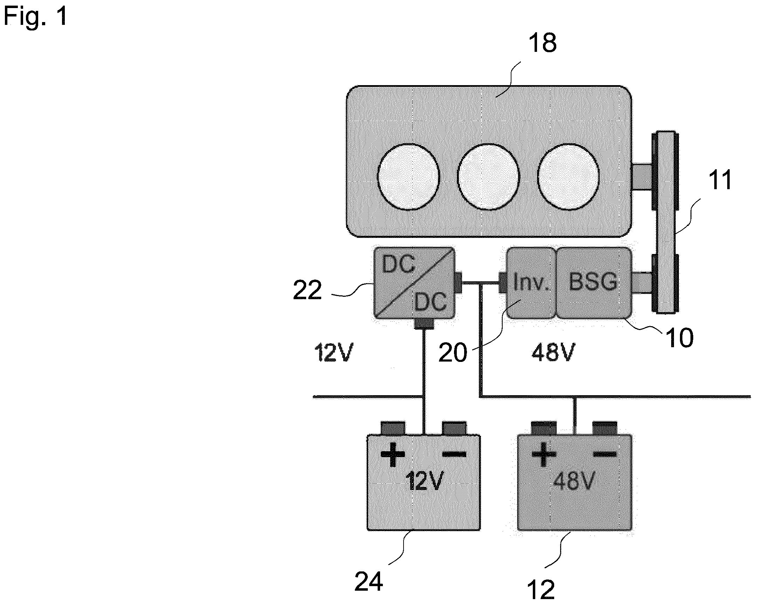

Figure 1 shows a belt starter-generator 10 driven by a 48V-battery 12 according to the prior art. Normally a hybrid electric vehicle comprises a 12V electrical system and a 48V electrical system. A 48V mild hybrid vehicle technology often uses a belt starter-generator 10 driven by a 48V-battery 12. The belt starter-generator 10 is connected to a main internal combustion engine crankshaft through a transmission belt 11. An integrated clutch connects and disconnects an electrical machine of the belt starter-generator from the internal combustion engine crankshaft.

The belt starter-generator comprises integrated electronics for controlling the electrical machine of the belt starter-generator 10. The electrical machine is configured to convert electric energy into mechanical energy and to convert also mechanical energy to electric energy.

During a start of the internal combustion engine 18 the electric machine turns the internal combustion engine 18 to start-up. The energy flows from the 48V-battery 12 to the internal combustion engine 18.

During a boost phase the electrical machine is used to boost up the power of the internal combustion engine 18. The energy flows from the 48V-battery 12 to the electrical machine to aid the internal combustion engine 18 in delivering power to the wheels. During a generator phase the electrical machine acts as a generator to charge the 48V-battery 12. The internal combustion engine 18 provides kinetic energy to the electrical machine. Thus, the energy flows from the internal combustion engine 18 to the 48V-battery 12.

During a coasting phase a clutch of the belt starting-generator 10 is decoupled and there is no interaction between the internal combustion engine 18 and the 48V-battery 12.

The belt starter-generator 10 and an inverter 20 are normally integrated in one housing. A separate DC/DC converter 22 is used to transfer the energy between a 12V-battery 24 and the 48V-battery 12. Often a bi-directional DC/DC converter is used. The bi-directional feature is used to pre-charge a 48V-DC-link, such that the connection of the 48V-battery can be made at low current.

Such a belt starter-generator system described above needs a belt starter-generator with integrated control, a DC/DC converter with integrated control and a 48V-battery.

It is an object of the present invention to provide a driving apparatus, a control unit to operate the driving apparatus and a driving apparatus system allowing for providing the driving apparatus at lower cost and/or with smaller footprint and/or with lower wight and/or with less wiring effort.

### SUMMARY

According to the present disclosure, one or more of the above-mentioned objects are achieved by the respective independent claims. Advantageous embodiments are given in the dependent claims.

According to a first aspect of the present invention a driving apparatus comprises an electrical machine, a first port, a second port, and an inverter.

In particular, the driving apparatus is for an internal combustion engine of a hybrid electric vehicle. More particularly, the electrical machine is configured to drive a belt drive which is mechanically couplable with the internal combustion engine. For driving the belt drive the driving apparatus preferably comprises a clutch, which operates for mechanically coupling the electrical machine and a pulley of the belt drive.

The electrical machine comprises multiple phases which are interconnected to form a star point. The electrical machine can be configured as a permanently excited, self-excited or externally excited electric machine, for example as a synchronous machine, or can be an asynchronous machine.

The first port of the driving apparatus operates for connecting a first energy storage device, wherein the first energy storage device is configured to drive the electrical machine and configured to be chargeable by the electrical machine.

The second port of the driving apparatus operates for connecting a second energy storage device. The second energy storage device is configured to be chargeable by the first energy storage device and has a charging voltage lower than that of the first energy storage device. A switchable connection connects the star point and the second port.

An AC side of the inverter is connected to the electrical machine and a second connection connects a DC side of the inverter with the first port.

The inverter comprises multiple controllable power switching elements and is configured to provide in a first operation mode energy from the first energy storage device to the electrical machine. The inverter is further configured to provide in a second operation mode energy from the electrical machine to the first energy storage device. In addition, the inverter is configured to provide in a third operation mode energy from the first energy storage device to the second energy storage device via the electrical machine. In the third operation mode at least one power switching element of the inverter forms at least one switch of a buck converter and at least one coil of the electric machine is operated as inductance of the buck converter. In particular, in the third operation mode the control of the multiple phases is performed such that a multi-phase buck converter functionality is effected.

In the third operation mode the star point of the electrical machine is electrically conductively connected to the second port such that the second energy storage device can be charged. Furthermore, in the third operation mode the clutch is decoupled such that there is not any interaction between the internal combustion engine and the first energy storage device.

By using the inverter in conjunction with the phases (respectively coils) of the electrical machine as bulk converter, in particular as a synchronous bulk converter, a separate DC/DC converter can be dispensed with. Thus, overall costs of the system are reduced. The overall weight of the system is reduced and less wiring is required.

In an advantageous embodiment according to the first aspect, the second energy storage device is configured to be chargeable by the electrical machine and the inverter is further configured to provide in a fourth operation mode energy from the electrical machine to the second energy storage device. For supporting the fourth operation mode the driving apparatus comprises a switchable connection between the DC side of the inverter and the second port.

Advantageously, this offers the possibility to charge the second energy storage device directly from the inverter. This offers the possibility to charge second energy storage device with a continuous energy flow from the internal combustion engine.

In a further advantageous embodiment according to the first aspect, the power switching elements of the inverter are interconnected such that the inverter comprises for each phase of the electrical machine a half-bridge circuit. Advantageously this allows for manufacturing the inverter with low cost.

In a further advantageous embodiment according to the first aspect, the driving apparatus comprises at least one controllable switching device for selecting the operation mode. In particular, a first controllable switching device is interposed between the star point and the second port and is configured to establish and interrupt, respectively, a power path between the electrical machine and the second energy storage device.

Optionally a second controllable switching device is arranged in the second connection connecting the DC side of the inverter with the first port. The second controllable switching device is configured to establish and interrupt, respectively, a power path to and from the first energy storage device.

Optionally a third controllable switching device is arranged in the connection connecting the DC side of the inverter with the second port. The third switching device establishes and interrupts, respectively, a power path via the inverter between the electrical machine and the second energy storage device

In a further advantageous embodiment according to the first aspect, the DC side of the inverter is connected via a first filter with the first port and /or the star point of the electrical machine is connected via a second filter with the second port. The filters are configured, for example, for suppression of high frequency switching noise.

In a further advantageous embodiment according to the first aspect, the inverter is configured to provide in a fifth operation mode energy from the second energy storage device to the first energy storage device. In the fifth operation mode at least one power switching element of the inverter forms at least one switch of a boost converter and at least one coil of the electric machine is operated as inductance of the boost converter. This can be used to pre-charge the first energy storage device.

In a further advantageous embodiment according to the first aspect, the driving apparatus comprises a first charging capacitor which is connected the second port and/or a second charging capacitor which is connected to the first port. In particular, the first charging capacitor is connected to the star point of the electrical machine. Alternatively, the first and second charging capacitors are arranged outside of the driving apparatus. In particular, the second charging capacitor is arranged on a boardnet of the first energy storage device. In particular, the first charging capacitor may operate as part of the buck converter and the second charging capacitors may operate as part of the boost converter.

According to a second aspect of the invention, a control unit for operating the driving apparatus according to the first aspect is configured to control the power switching elements of the inverter such that
- in a first operation mode energy from the first energy storage device is provided to the electrical machine,
- in a second operation mode energy is provided from the electrical machine to the first energy storage device and
- in a third operation mode energy is provided from the first energy storage device to the second energy storage device, wherein in the third operation mode the control unit controls the power switching elements of the invert such that at least one power switching element of the inverter forms at least one switch of a buck converter and at least one coil of the electric machine is operated as inductance of the buck converter and the star point of the electrical machine is connected to the second port.

In an advantageous embodiment according to the second aspect, the control unit is further configured to control the at least one controllable switching device and/or a coupling of the clutch.

In a further advantageous embodiment according to the second aspect, the control unit is configured to control the power switching elements of the inverter such that in a fourth operation mode energy is provided from the electrical machine to the second energy storage device.

In a further advantageous embodiment according to the second aspect, the control unit is further configured to control the power switching elements of the inverter such that in a fifth operation mode energy is provided from the second storage device to the first energy storage device via the electrical machine, and in the fifth operation mode at least one power switching element of the inverter forms at least one switch of a boost converter and at least one coil of the electric machine is operated as inductance of the boost converter.

Advantageous embodiments of the first aspect are also valid for the second aspect.

According to a third aspect of the invention, a driving apparatus system comprises the driving apparatus according to the first aspect and the control unit according to the second aspect. In particular, the control unit and the driving apparatus are arranged in a common housing.

In an advantageous embodiment according to the third aspect, the driving apparatus system comprises a first energy storage device connected to the first port of the driving apparatus and a second energy storage device connected to the second port of the driving apparatus.

Advantageous embodiments of the first and second aspect are also valid for the third aspect.

### BRIEF DESCRIPTION OF THE DRAWINGS

It is to be understood that both the foregoing general description and the following detailed description are merely exemplary and are intended to provide an overview or framework to understand the nature and character of the claims. The drawings illustrate one or more embodiments, and together with the description serve to explain principles and operation of the various embodiments.
Fig. 1 shows a block diagram of a belt starter-generator for a hybrid electric vehicle according to the prior art,
Fig. 2 shows a block diagram of first exemplary embodiment of a driving apparatus according to the invention and
Fig. 3 shows a block diagram of second exemplary embodiment of a driving apparatus according to the invention.

Same elements in different figures of the invention are denoted by the same reference signs.

The drawings are not necessarily drawn to scale but are configured to clearly illustrate the disclosure.

It is understood that when an element is described as "connected" to another element, the elements may be directly connected or connected via one or more intermediate elements.

### DETAILED DESCRIPTION OF EMBODIMENTS

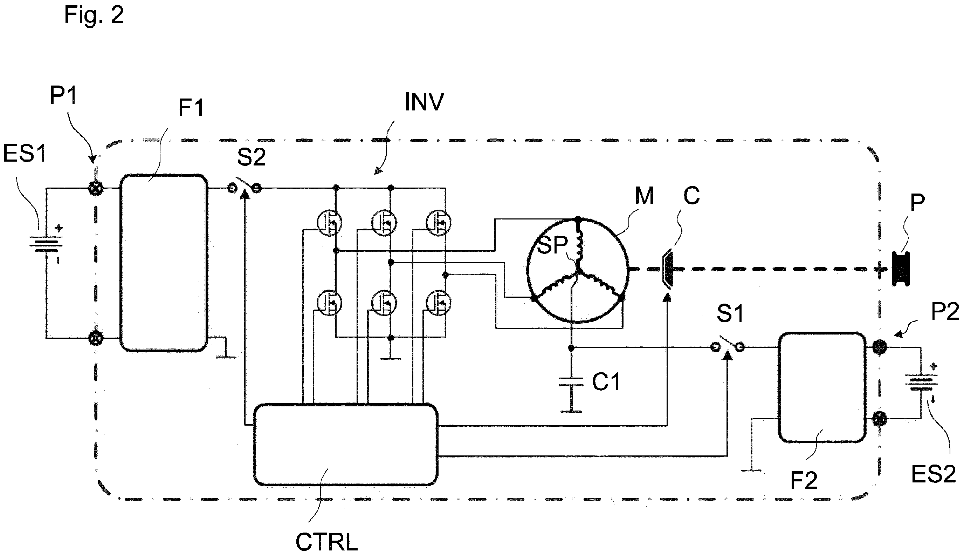

Figure 2 shows a block diagram of a first exemplary embodiment of a driving apparatus for a hybrid electric vehicle. For example, the driving apparatus is used as a belt starter-generator. The hybrid electric vehicle is, for example, a mild hybrid electric vehicle.

The driving apparatus comprises an electrical machine M. In particular, the electrical machine M is configured to drive a belt drive which is mechanically couplable with an internal combustion engine of the hybrid electric vehicle. For driving the belt drive the driving apparatus may comprise a clutch C configured to mechanically couple the electrical machine M and a pulley P of the belt drive. The electric machine M comprises several phases, for example three phases, and is configured as a permanently excited, self-excited or externally excited electric machine, for example as a synchronous machine, or can be an asynchronous machine. The electric machine M comprises a star point SP connecting respective inner terminals of the phases of the electric machine M. The star point SP can be adopted to be separable.

The driving apparatus comprises a first port P1 and a second port P2. The first port P1 is for connecting a first energy storage device ES1 to the driving apparatus, wherein the first energy storage device ES1 is configured to drive the electrical machine M and configured to be chargeable by the electrical machine M. In particular, the first energy storage ES1 device is a battery, in particular a 48V-battery. Alternatively, the first energy storage device ES1 may be a fuel cell.

The second port P2 is for connecting a second energy storage device ES2 to the driving apparatus. The second energy storage ES2 device is configured to be chargeable by the first energy storage device ES1 and has a charging voltage lower than that of the first energy storage device ES1. In particular, the second energy storage device ES2 is a battery, in particular a 12V-battery. Alternatively, the second energy storage device ES2 is a fuel cell.

In operation, the first energy storage device ES1 is connected to the first port P1 and the second energy storage device ES2 is connected to the second port P2.

Furthermore, the driving apparatus comprises an inverter INV. The inverter INV comprises an AC side and a DC side. The DC side comprises at least one DC phase. For example, the at least one DC phase of the inverter INV is connected via a second switching device S2 to the first port P1. The second switching device S2 can also be named safety switch.

An optional filter F1 may be provided which is arranged between the first port P1 and the safety switch S2. For example, a first port of the first filter F1 is connected to the first port P1 of the driving apparatus and a second port of the first filter F1 is connected to the DC side of the inverter.

The AC side of the inverter INV is connected to the electrical machine M, in particular to phase/coil connections of the electrical machine M. For example, each AC phase of the inverter INV is connected to one phase connection of the electrical machine M, in particular connected to an outer terminal of the respective phase.

The inverter INV comprises several power switching elements. Such a power switching element comprises for example a semiconductor power switch like a power transistor or diode, for example a MOSFET or an IGBT.

The inverter INV may comprise several controlled half-bridges, wherein each half-bridge comprises two of the several power switching elements of the inverter INV. Preferably the number of phases of the inverter INV corresponds to the number of phases of the electrical machine M. For example, the inverter INV comprises three half-bridges.

Seen from the inverter INV, a first switching device S1 is connected downstream of the electric machine M. The first switching device S1 connects the electric machine M, in particular its star point SP or an inner terminal of at least one phase of the electric machine M, to the second port P2, in particular directly, i.e. without converting the voltage.

For example, a first charging capacitor is connected the second port. The first charging capacitor may be connected to the star point of the electrical machine. The first charging capacitor may operate as part of a buck converter.

An optional second filter F2 may be arranged between the first switching device S1 and the second port P2. For example, the second filter F2 may comprise a reverse polarity protection circuit.

In Figure 2 an abstractly depicted control unit CTRL is shown. The driving apparatus and the control unit CTRL may be integrated in a common housing.

The control unit CTRL is configured to control the controllable power switching elements of the inverter. Preferably, the control unit CTRL is also configured to control the switching devices S1, S2, S3 and/or a coupling of the clutch C to the electrical machine M.

The control unit CTRL is configured to control the power switching elements of the inverter INV such that
- in a first operation mode energy is provided from the first energy storage device ES1 to the electrical machine M,
- in a second operation mode energy is provided from the electrical machine M to the first energy storage device ES1,
- in a third operation mode energy is provided from the first energy storage device ES1 to the second energy storage device ES2, wherein in the third operation mode at least one power switching element of the inverter INV forms at least one switch of a buck converter and at least one coil of the electric machine M is operated as inductance of the buck converter.

Optionally, the control unit CTRL shown in Figure 2 is further configured to control the power switching elements of the inverter INV such that in a fifth operation mode energy is provided from the second storage device ES2 to the first energy storage device ES1 via the electrical machine M. In the fifth operation mode at least one power switching element of the inverter INV forms at least one switch of a boost converter and at least one coil of the electric machine M is operated as inductance of the boost converter.

In the first and second operation mode the safety switch S2 is closed and the first switching device S1 is open.

In the third and fifth operation mode the safety switch S2 is closed and the first switching device S1 is closed. Furthermore, in the third and fifth operation mode the clutch C is decoupled.

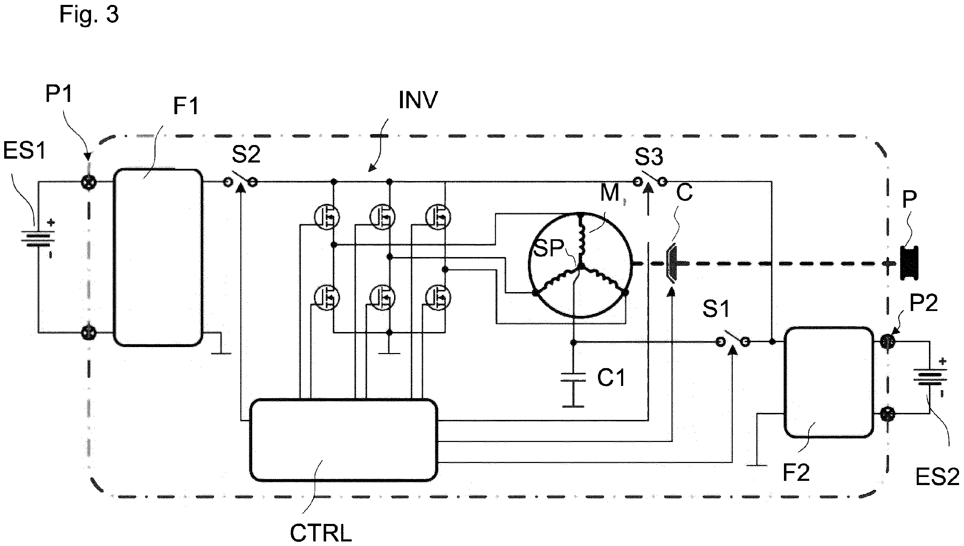

In Figure 3 a block diagram of second exemplary embodiment of a driving apparatus which provides in addition direct charging of the second energy storage device ES2 is shown.

In contrast to the embodiment shown in Figure 2, the driving apparatus in Figure 3 comprises an additional switchable connection between the DC side of the inverter INV and the second port P2. A further controllable switching device S3 is arranged in this connection. The second energy storage device ES2 is configured to be chargeable by the electrical machine M.

The control unit CTRL shown in Figure 3 is optionally further configured to control the power switching elements of the inverter INV such that in a fourth operation mode energy is provided from the electrical machine M to the second energy storage device ES2. Thus, the electrical machine M operates as a generator transferring the kinetic energy of the internal combustion engine to the second energy storage device ES2.

In the fourth operation mode the safety switch S2 is open, the first switching device S1 is open, the clutch C is decoupled and the further controllable switching device S3 is closed.

As shown above only one control unit CTRL instead of two control units is needed. An additional control unit for a separate DC/DC converter can be saved. Coils of the electrical machine M and the inverter bridges have double functions. Thus, overall cost of the system can be reduced, overall weight of the system is reduced and less wiring of the system is needed.

## Claims

1. A driving apparatus comprising an electrical machine (M), a first port (P1), a second port (P2), and an inverter (INV), wherein
- the electrical machine (M) comprises multiple phases which are interconnected to form a star point (SP),
- the first port (P1) operates for connecting a first energy storage device (ES1), wherein the first energy storage device (ES1) is configured to drive the electrical machine (M) and configured to be chargeable by the electrical machine (M),
- the second port (P2) operates for connecting a second energy storage device (ES2), wherein the second energy storage device (ES2) is configured to be chargeable by the first energy storage device (ES1) and has a charging voltage lower than that of the first energy storage device (ES1);
- a switchable connection connects the star point (SP) and the second port (P2),
- an AC side of the inverter (INV) is connected to the electrical machine (M) and a second connection connects a DC side of the inverter (INV) and the first port (P1),
- the inverter (INV) comprises multiple controllable power switching elements and is configured to provide
- -in a first operation mode energy from the first energy storage device (ES1) to the electrical machine (M),
- - in a second operation mode energy from the electrical machine (M) to the first energy storage device (ES1),
- - in a third operation mode energy from the first energy storage device (ES1) to the second energy storage device (ES2) via the electrical machine (M), wherein in the third operation mode at least one power switching element of the inverter (INV) forms at least one switch of a buck converter and at least one coil of the electric machine (M) is operated as inductance of the buck converter.

2. The driving apparatus according to claim 1,
wherein the second energy storage device (ES2) is configured to be chargeable by the electrical machine (M) and the inverter (INV) is further configured to provide in a fourth operation mode energy from the electrical machine (M) to the second energy storage device (ES2).

3. The driving apparatus according to claim 1 or 2,
wherein the power switching elements of the inverter (INV) are interconnected such that the inverter (INV) comprises for each phase of the electrical machine (M) a half-bridge circuit.

4. The driving apparatus according to any one of claims 1 to 3,
wherein the driving apparatus comprises at least one controllable switching device (S1, S2, S3) for selecting the operation mode.

5. The driving apparatus according to any one of claims 1 to 4,
wherein the DC side of the inverter (INV) is connected via a first filter(F1) with the first port (P1) and/or the star point (SP) of the electrical machine (M) is connected via a second filter (F2) with the second port.

6. The driving apparatus according to any one of claims 1 to 5,
wherein the first energy storage device (ES1) is configured to be chargeable by the second energy storage device (ES2) and the inverter (INV) is further configured to provide in a fifth operation mode energy from the second storage device (ES2) to the first energy storage device (ES1) via the electrical machine (M), and in the fifth operation mode at least one power switching element of the inverter (INV) forms at least one switch of a boost converter and at least one coil of the electric machine (M) is operated as inductance of the boost converter.

7. The driving apparatus according to any one of claims 1 to 6,
wherein the driving apparatus comprises a first charging capacitor which is connected the second port (P2) and/or a second charging capacitor which is connected to the first port (P1).

8. A control unit (CTRL) for operating a driving apparatus according to any one of claims 1 to 7, wherein the control unit (CTRL) is configured to control the power switching elements of the inverter (INV) such that
- in a first operation mode energy is provided from the first energy storage device (ES1) to the electrical machine (M),
- in a second operation mode energy is provided from the electrical machine (M) to the first energy storage device (ES1),
- in a third operation mode energy is provided from the first energy storage device (ES1) to the second energy storage device (ES2), wherein in the third operation mode at least one power switching element of the inverter (INV) forms at least one switch of a buck converter and at least one coil of the electric machine (M) is operated as inductance of the buck converter.

9. The control unit (CTRL) according to claim 8,
wherein the control unit (CTRL) is configured to control the power switching elements of the inverter (INV) such that in a fourth operation mode energy is provided from the electrical machine (M) to the second energy storage device (ES2).

10. The control unit (CTRL) according to claim 8 or 9,
wherein the control unit (CTRL) is further configured to control the power switching elements of the inverter (INV) such that in a fifth operation mode energy is provided from the second storage device (ES2) to the first energy storage device (ES1) via the electrical machine (M), and in the fifth operation mode at least one power switching element of the inverter (INV) forms at least one switch of a boost converter and at least one coil of the electric machine (M) is operated as inductance of the boost converter.

11. A driving apparatus system comprising a driving apparatus according to any one of claims 1 to 7 and a control unit (CTRL) according to any one of claims 8 to 10.

12. The driving apparatus system according to claim 11, wherein the driving apparatus system further comprises the first energy storage device (ES1) connected to the first port (P1) of the driving apparatus and the second energy storage device (ES2) connected to the second port (P2) of the driving apparatus.
